# EUROPEAN PATENT APPLICATION

(11) **EP 2 275 331 A1**
(43) Date of publication of application: **19.01.2011**
(21) Application number: 10000029.8
(22) Date of filing: 05.01.2010
(51) Int. Cl.: B62J 7/08, B62J 11/00

(54) **Hang-on device mounting structure**

(30) Priority: 13.07.2009 TW 98212742 U
(71) Applicant: Niche Summit Co., Ltd., Neihu Taipei City (TW)
(72) Inventor: Cheng, Chuan-Yu, Taipei City (TW)
(74) Representative: Glawe, Delfs, Moll

(57) **Abstract**

A hang-on device mounting structure for securing a hang-on device to a motorcycle or bicycle to avoid interference of the hang-on device with the vehicle rider is disclosed to include one or multiple base panels (1) mounted in a toolbox or luggage-carrier of a motorcycle or bicycle, each base panel (1) having one or a number of positioning units (11), and one of a number of connection devices (2) for securing a hang-on device to the base panel(s), each connection device (2) has a mounting member (21) for fastening to one positioning unit (11) of one base panel (1), a connector (23) connectable to one matching connector of the hang-on device and an extension member (22) connected between the mounting member and the connector.

## Description

### BACKGROUND OF THE INVENTION

### 1. Field of the Invention:

The present invention relates to a hang-on device mounting arrangement and more particularly, to a hang-on device mounting structure for securing a hang-on device to a two-wheel vehicle to avoid interference of the hang-on device with the vehicle ride.

### 2. Description of the Related Art:

When going outdoors, one may carry many personal items such as purse, pen, notebook, cell phone, bunch of keys, eyeglasses, water bottle and etc. A woman may also carry cosmetic bag, facial tissue and other makeup accessories. These personal items may be carried in a backpack, shoulder bade, carry-on bag, suitcase, water bottle, safety helmet or sea bag. Further, a person may use a travel bag or sports bag to carry personal items, sports wear or sports gear. Further, some people may take a bus or public transportable vehicle when going to the office or going home after work. Some other people may use a two-wheel vehicle, for example, motorcycle or bicycle, as one's personal transportation vehicle. When riding a two-wheel vehicle, one may carry a water bottle, sports gear and some other personal items in a bag, and put the bag on the back or hang the bag on the two-wheel vehicle. During riding, the bag may swing, interfering with movement of the rider's body. To avoid swinging of the bag, the rider may put the bag in the toolbox of the two-wheel vehicle or fasten the bag to the luggage-carrier of the two-wheel vehicle. However, if the bag is too big to be put in the toolbox of the two-wheel vehicle or fastened to the luggage-carrier of the two-wheel vehicle or hung on the rider's back, the rider may hang the bag on the top tube between the saddle and head tube of the two-wheel vehicle or put the bag on the front footrest of the two-wheel vehicle.

When carrying a bag on the back as one is riding a motorcycle or bicycle, the bag may swing, causing a dynamic drag force that hinders movement of the rider's body. If the rider stops the motorcycle or bicycle suddenly, the effect of inertia will force the bag and the storage items forwards, affecting riding safety.

When carrying a bag on the front footrest of a motorcycle or bicycle or hanging a bag on the front side of the motorcycle or bicycle as one is riding the motorcycle or bicycle, the bag may hinder resting of the rider's legs on the front footrest. When moving the motorcycle or bicycle forwards after the green traffic light is on, the rider may forget the presence of the bag on the front footrest and may step the legs on the bag directly. In order not to step on the bag that is put in the front footrest of the motorcycle, the rider may have to suspend the legs outside the motorcycle. Suspending the legs outside the motorcycle affects riding safety.

Accordingly, there is a strong need for a measure, which allows carrying of a hang-on device on a two-wheel vehicle without affecting vehicle riding safety.

### SUMMARY OF THE INVENTION

The present invention has been accomplished under the circumstances in view. It is one object of the present invention to provide a hang-on device mounting structure, which enables a hang-on device to be conveniently detachably secured to a two-wheel vehicle without affecting vehicle riding safety.

To achieve this and other objects of the present invention, a hang-on device mounting structure comprises at least one base panel, each base panel having at least one positioning unit, and at least one connection device for securing a hang-on device to the at least one base panel. Each connection device comprises a mounting member for fastening to one positioning unit of one base panel, a connector for the connection of one matching connector of the hang-on device, and an extension member connected between the mounting member and the connector. By means of mounting the at least one base panel in the toolbox of a motorcycle or the luggage-carrier of a bicycle, the hang-on device mounting structure can secure a hang-on device, such as backpack, shoulder bade, carry-on bag, suitcase, water bottle, safety helmet or sea bag, to the motorcycle or bicycle without affecting motorcycle or bicycle riding safety.

Further, the connector of each connection device can be a male fastening member or female fastening member, and each matching connector of the hang-on device can be a female fastening member or male fastening member for fastening to the male fastening member of female fastening member of the connector of one respective connection device. A male fastening member can be a male buckle member, hook member, stud or tape of hook materials. A female fastening member can be a female buckle member, eye member, socket or tape of loop materials for the fastening of the male buckle member, hook member, stud or tape of hook materials.

Further, each base panel of the hang-on device mounting structure can be made having multiple positioning units for the connection of multiple connection devices, and the connectors of the connection devices that are connected to one base panel can be male fastening members or female fastening members of different designs for securing the hang-on device in place and keeping the hang-on device in shape.

Further, two base panels can be bilaterally mounted in the toolbox of a motorcycle or affixed to the luggage-carrier of a bicycle so that the connection devices that are respectively connected to the two base panels can secure a hang-on device firmly on the top side of the seat of the motorcycle that covers the toolbox or the top side of the luggage-carrier of the bicycle.

### BRIEF DESCRIPTION OF THE DRAWINGS

FIG. 1 is an exploded view of a hang-on device mounting structure in accordance with a second embodiment of the present invention.

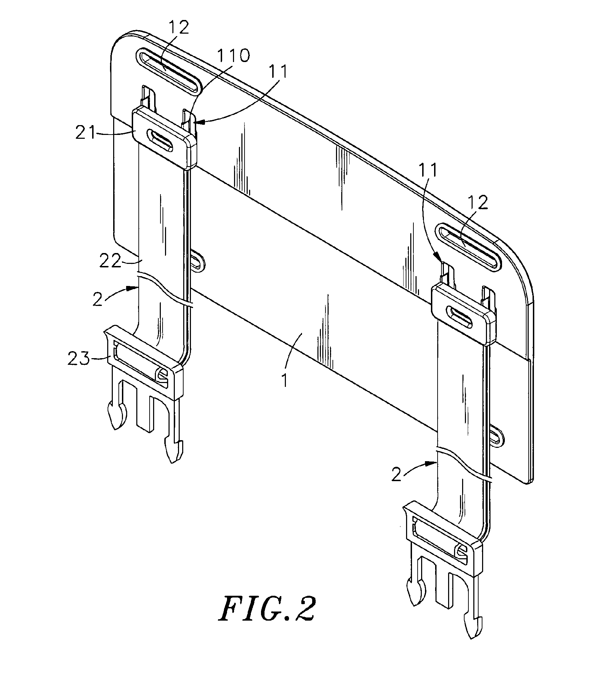

FIG. 2 is an elevational assembly view of the hang-on device mounting structure shown in FIG. 1.

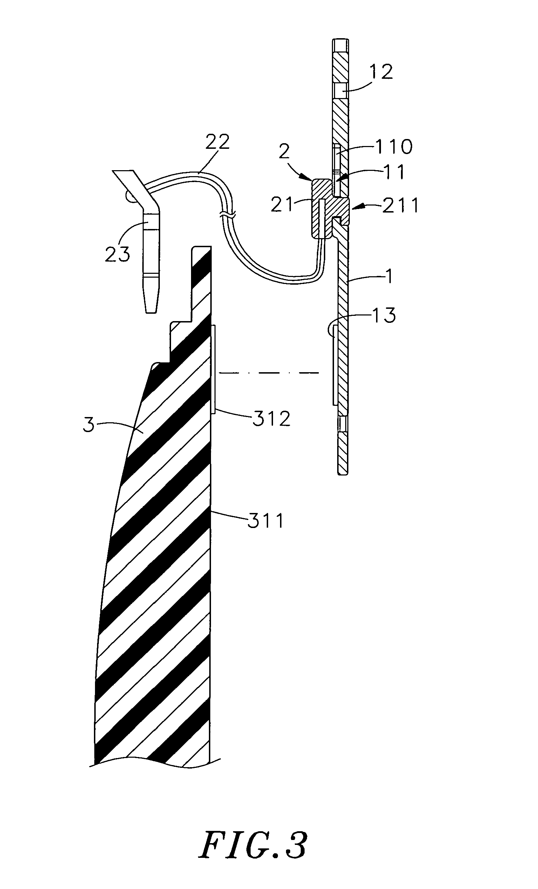

FIG. 3 is a sectional side view of the present invention, showing a mounting example of the base panel of the hang-on device mounting structure in a toolbox of a vehicle.
FIG. 4 is an applied view of the present invention, showing the base panel of the hang-on device mounting structure installed in a toolbox of a vehicle and a hang-on device fastened to the connectors of the connection devices of the hang-on device mounting structure outside the toolbox.
FIG. 5 illustrates each base panel of the hang-on device mounting structure provided with a first fastening element for connection to a respective second fastening element inside a toolbox of a vehicle and belt members connected between the two base panels of the hang-on device mounting structure.
FIG. 6 is a schematic drawing of the present invention, showing the connectors of the connection devices suspending outside the seat of a vehicle for the connection of matching connectors of a hang-on device.
FIG. 7 is a schematic sectional side view of the present invention, showing the hang-on device mounting structure installed in a toolbox of a vehicle and the matching connectors of a hang-on device respectively fastened to the connectors of the connection devices of the hang-on device mounting structure.
FIG. 8 is a schematic drawing of the present invention, showing another application example of the present invention where the hang-on device mounting structure is installed in a luggage-carrier of a bicycle for securing a seat cushion of hang-on device on the luggage-carrier.
FIG. 9 is a perspective view of an alternate form of the hang-on device mounting structure in accordance with the present invention.
FIG. 10 is a perspective view of another alternate form of the hang-on device mounting structure in accordance with the present invention.
FIG. 11 is an exploded view of still another alternate form of the hang-on device mounting structure in accordance with the present invention.
FIG. 12 is a perspective view of still another alternate form of the hang-on device mounting structure in accordance with the present invention.
FIG. 13 is a sectional side view of the present invention, showing a mounting example of the base panel of the hang-on device mounting structure of FIG. 11 in a toolbox of a vehicle.
FIG. 14 is a perspective view of the present invention, showing the hang-on device mounting structure of FIG. 11 installed in a toolbox of a vehicle and a hang-on device fastened to the connectors of the connection devices of the hang-on device mounting structure.

### DETAILED DESCRIPTION OF THE PREFERRED EMBODIMENT

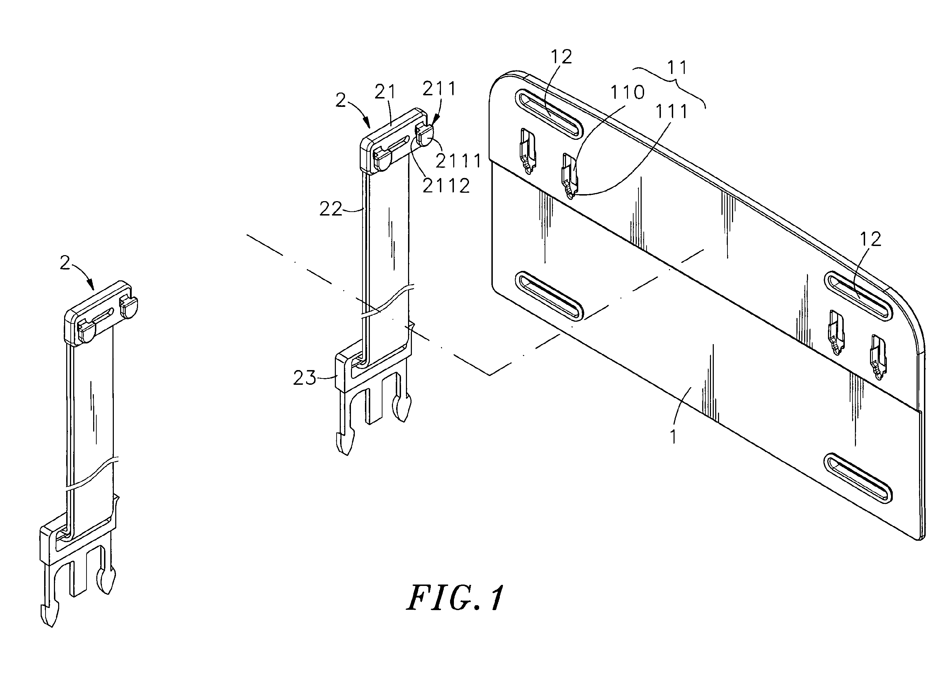

Referring to FIGS. 1∼3, a hang-on device mounting structure in accordance with the present invention comprises at least one base panel **1** and at least one connection device **2.**

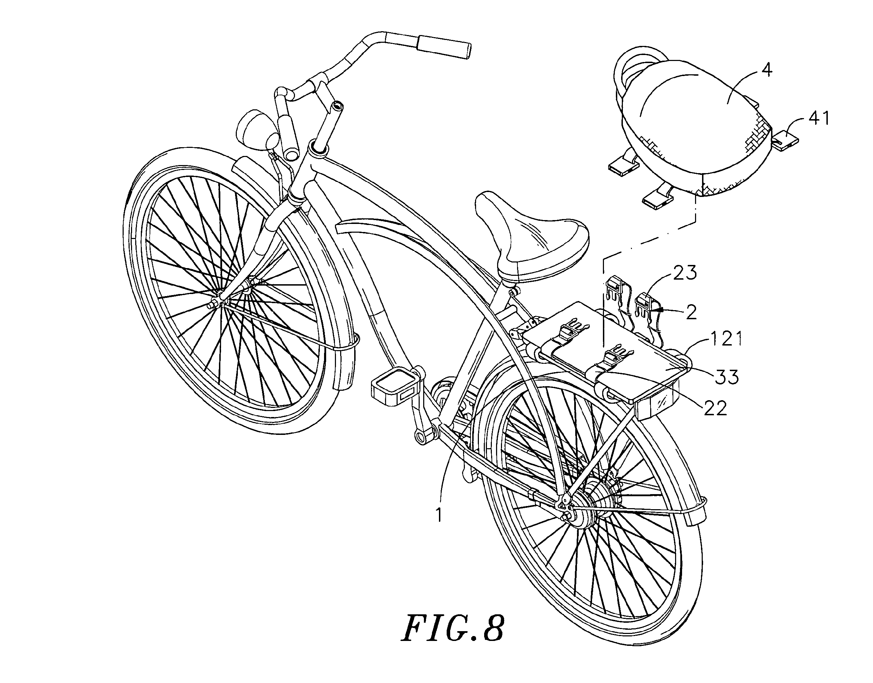

The base panel **1** is a flat sheet member having at least one positioning unit **11** and a plurality of insertion slots **12** spaced around the at least one positioning unit **11** for the insertion of belt members **121** (see FIG. 8). Each positioning unit **11** includes two elongated through holes **110** and a narrow elongated locating notch **111** respectively downwardly extended from the bottom end of each of the two elongated through holes **110.** The narrow elongated locating notch **111** has a width smaller than the width of the elongated through holes **110.**

The connection device **2** comprises a mounting member **21** for fastening to one positioning unit **11** of the base panel **1,** a connector **23,** and an extension member **22** connected between the mounting member **21** and the connector **23.** The mounting member **21** has two coupling rods **211** protruded from one side thereof for insertion through the two elongated through holes **110** of one positioning unit **11** of the base panel **1** respectively. Each coupling rod **211** has a head **2111** and a neck **2112** connected between the head **2111** and the mounting member **21.** The head **2111** is insertable through one elongated through hole **110** of the base panel **1.** However, the diameter (or transverse width) of the head **2111** is greater than the transverse width of the narrow elongated locating notch **111.** The neck **2112** has a transverse width approximately equal to or relatively smaller than the width of the narrow elongated locating notch **111.**

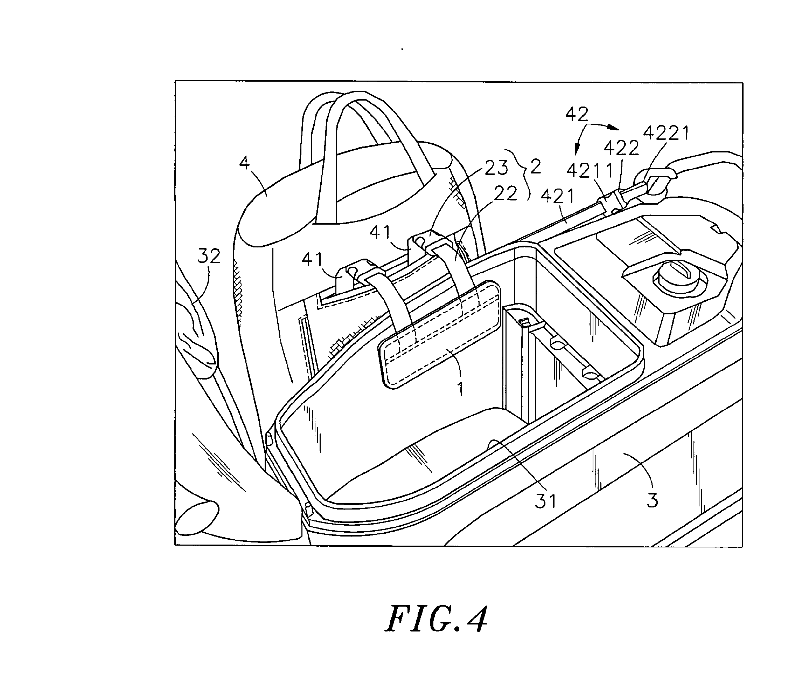

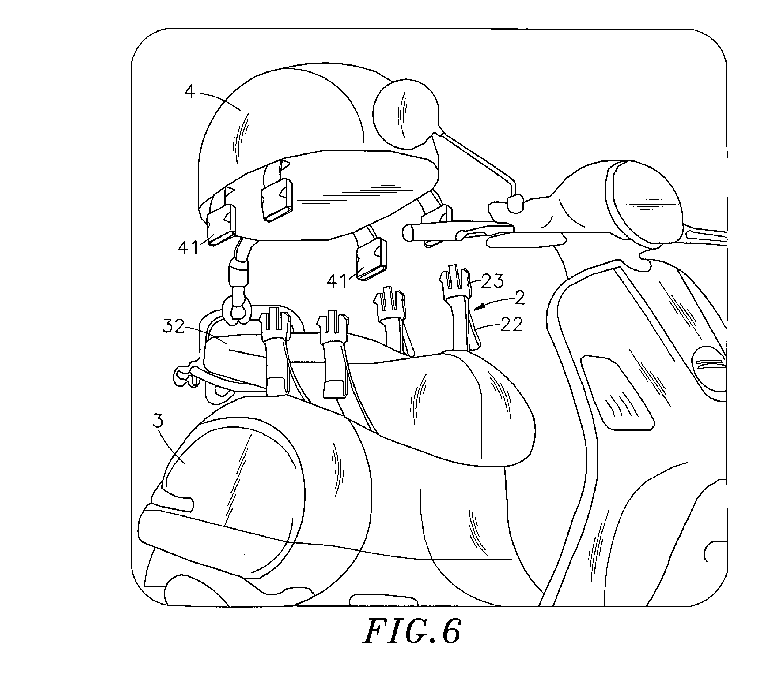

During installation, the mounting member **21** of each connection device **2** is fastened to one positioning unit **11** of the base panel **1** by means of inserting the heads **2111** of the coupling rods **211** through the elongated through holes **110** of the respective positioning unit **11** of the base panel **1** and then lowering the respective connection device **2** to force the necks **2112** of the respective coupling rods **211** into the respective narrow elongated locating notches **111** of the respective positioning unit **11** of the base panel **1.** After connection of the connection devices **2** to the positioning units **11** of the base panel **1,** a hang-on device **4** can be then fastened to the connectors **23** of the connection devices **2** (see FIGS. 4, 5 and 6).

The aforesaid hang-on device **4** can be a backpack, shoulder bade, carry-on bag, suitcase, water bottle, safety helmet or sea bag.

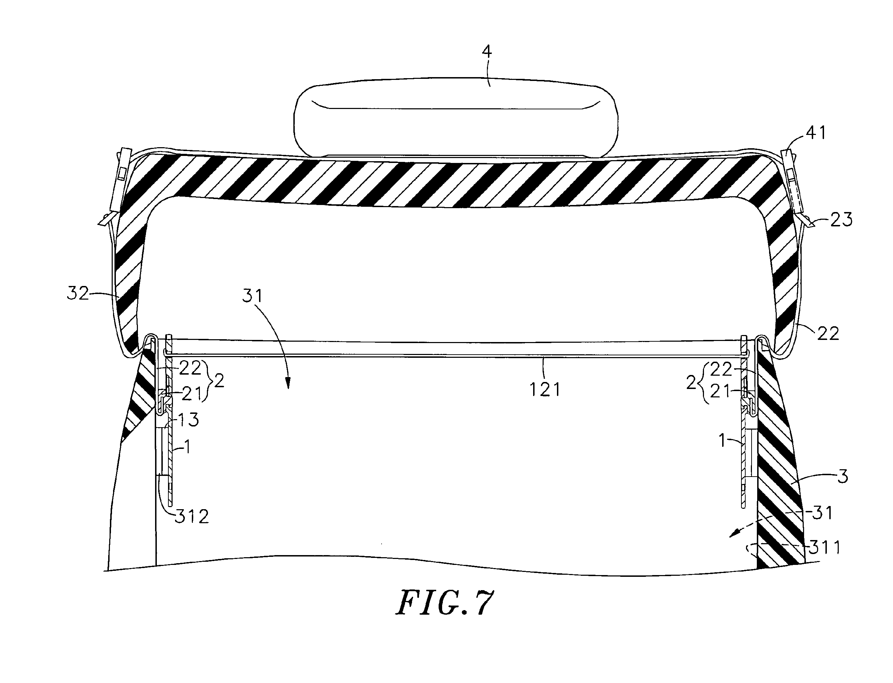

Referring to FIGS. 4, 5, 6 and 7, the base panel **1** can be inserted into the inside of the toolbox **31** of a vehicle **3,** for example, a motorcycle or bicycle. After closed the seat **32** of the vehicle **3,** the seat **32** holds the base panel **1** firmly inside the toolbox **31,** allowing the extension members **22** of the connection devices **2** to be extended to the outside of the toolbox **31** so that matching connectors **41** of a hang-on device **4** can be fastened to the connectors **23** of the connection devices **2.** Thus, the hang-on device **4** is hung on the seat **32** of the vehicle **3,** and will not be forced to swing during running of the vehicle **3,** assuring riding safety. The vehicle **3** can be a motorcycle or bicycle. Binding straps may be inserted through the insertion slots **12** of the base panel **1** to secure the base panel **1** to the seat **32** of the vehicle **3.**

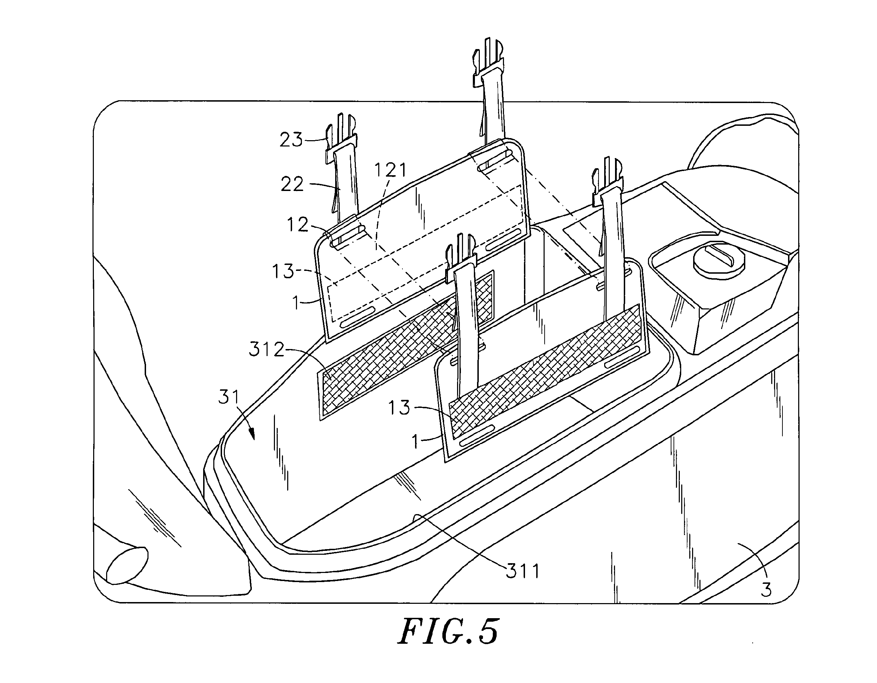

Referring to FIGS. 5, 6 and 7 again, two base panels **1** can be mounted in the toolbox **31** of a vehicle **3** at two opposite sides for securing a hang-on device **4.** Further, the base panel **1** can be made having a first fastening element **13** located on the back side thereof for detachably fastening to a respective second fastening element **312** at one lateral sidewall **311** in the toolbox **31** of a vehicle **3.** The first fastening element **13** can be a tape of hook materials (or tape of loop materials). The second fastening element **312** can be a tape of loop materials (or tape of hook materials for securing the first fastening element **13.** After connection of the first fastening elements **13** of the two base panels **1** to the respective second fastening elements **312** in the toolbox **31** of a vehicle **3,** the seat **32** is closed on the toolbox **31,** allowing the extension members **22** of the connection devices **2** to be extended to the outside of the toolbox **31** at two opposite lateral sides. At this time, matching connectors **41** of a hang-on device **4** can be fastened to the connectors **23** of the connection devices **2** for enabling the hang-on device **4** to be hung on the seat **32** of the vehicle **3.** Further, belt members **121** can be inserted through the insertion slots **12** of the two base panels **1** to join the two base panels **1.** After installation, the connectors **41** of the hang-on device **4** impart a pull force to the connection devices **2** and the two base panels **1,** and the belt members **121** impart a pull force to the two base panels **1** against the pull force from the hang-on device **4.**

Referring to FIG. 4 again, the hang-on device **4** is provided with a fastening device **42** for fastening to the frame structure of the vehicle **3.** The fastening device **42** comprises an elastic band **421** fixedly connected to the hang-on device **4** for allowing the hang-on device **4** to be rotated to any desired angle, a first buckle member **4211** fixedly fastened to one end of the elastic band **421** remote from the hang-on device **4,** a binding band **4221** fastened to the frame structure of the vehicle **3,** and a second buckle member **422** affixed to the binding band **4221** and connectable to the first buckle member **4211.**

Further, the aforesaid belt members **121** can be fabric straps, ropes, elastic bands, rubber tapes or rubber rods. The extension member **22** of each connection device **2** can be a fabric straps, ropes, elastic bands, rubber tapes, rubber rods or rubber strips. The connector **23** of each connection device **2** can be a male fastening member (or female fastening member), and each matching connector **41** of the hang-on device **4** can be a female fastening member (or male fastening member) detachably connectable to the male fastening member (or female fastening member) of the connector **23.** According to the present invention, a male fastening member can be a male buckle member, hook member, stud or tape of hook materials, and a female fastening member can be a female buckle member, eye member, socket or tape of loop materials for the fastening of the male buckle member, hook member, stud or tape of hook materials.

As stated above, a hang-on device mounting structure according to the present invention comprises at least one base panel **1** mounted inside a toolbox **31** of a vehicle **3** and having at least one positioning unit **11,** and at least one connection device **2** each having an extension member **22,** a mounting member **21** located on one end of the extension member **22** and connected to one positioning unit **11** of one base panel **1** and a connector **23** located on the other end of the extension member **22** outside the toolbox **31** for connection to a matching connector **41** of a hang-on device **4** to secure the hang-on device **4** to the seat **32** of the vehicle **3** that covers the toolbox **31.**

Referring to FIG. 8, each base panel **1** of a hang-on device mounting structure in accordance with the present invention can be affixed to a vehicle's (bicycle's) luggage-carrier **33** for enabling the connector **23** of each connection device **2** of the hang-on device mounting structure to be fastened to one matching connector **41** of a hang-on device **4** to secure the hang-on device **4** to the luggage-carrier **33.**

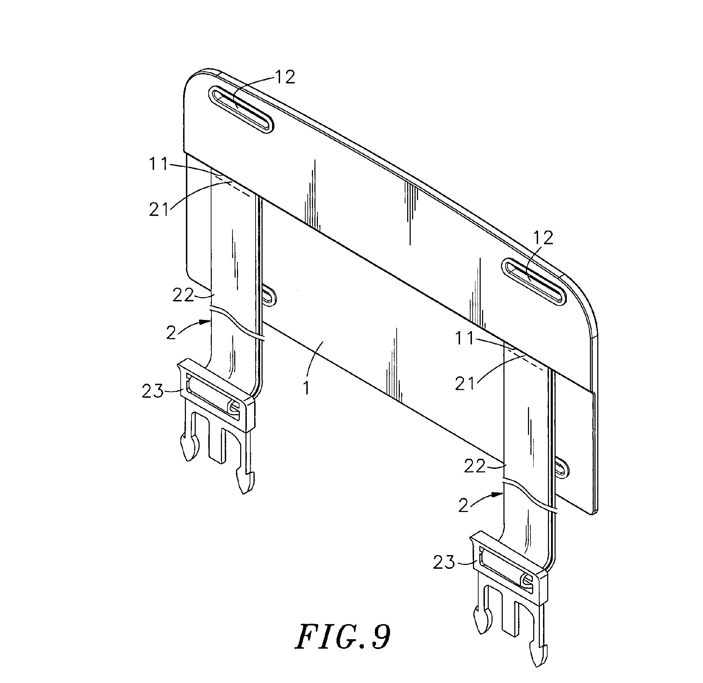

FIG. 9 is a perspective view of a hang-on device mounting structure in accordance with a second embodiment of the present invention. This second embodiment is substantially similar to the aforesaid first embodiment with the exception that the mounting members **21** of the connection devices **2** according to this second embodiment are respectively formed integral with the positioning units **11** of the base panel **1.** Because the mounting members **21** of the connection devices **2** are respectively formed integral with the positioning units **11** of the base panel **1,** the connection devices **2** have high structural strength against stretching.

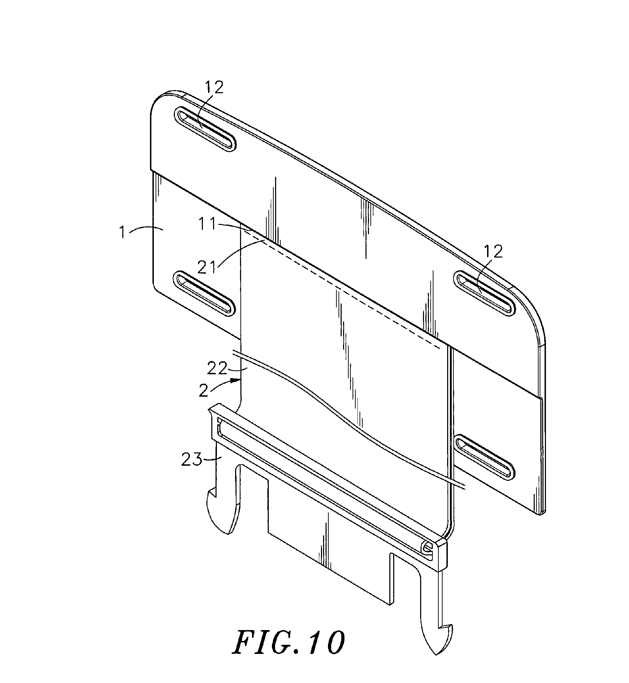

FIG. 10 is a perspective view of another alternate form of the hang-on device mounting structure in accordance with the present invention. According to this embodiment, the mounting member, the mounting member **21** of the connection device **2** is fixedly fastened to the positioning unit **11** of the base panel **1** with stitches or an adhesive.

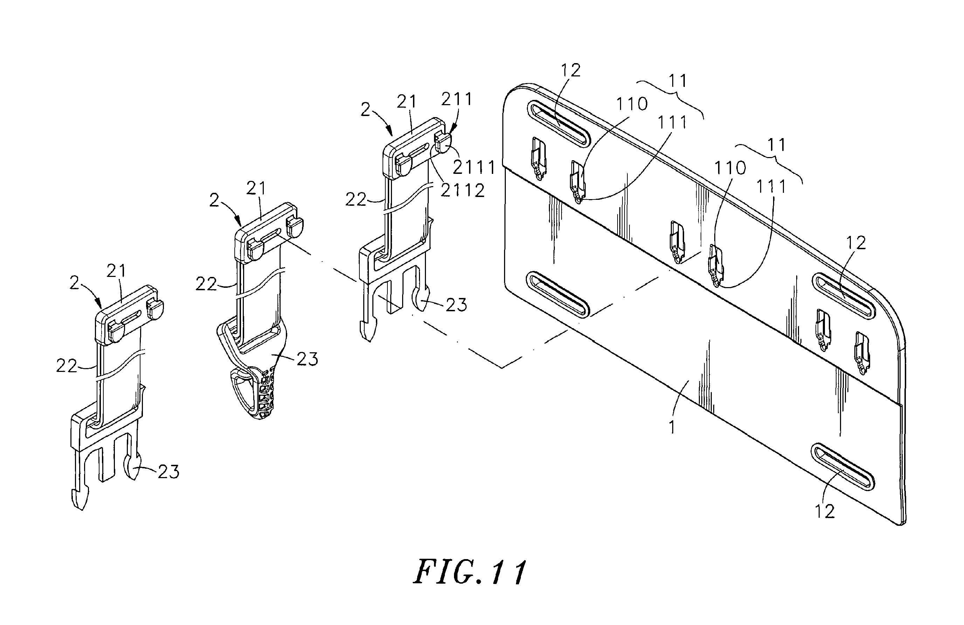

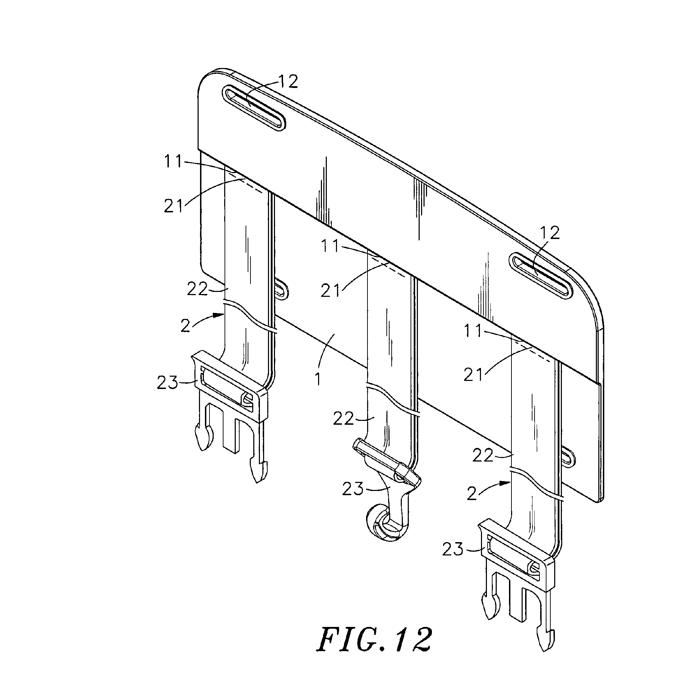

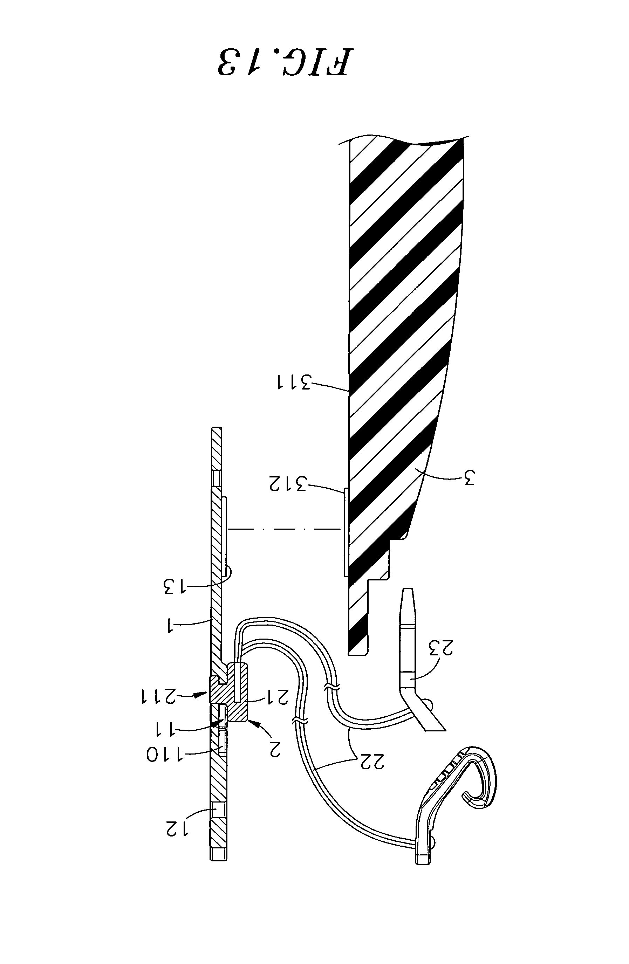

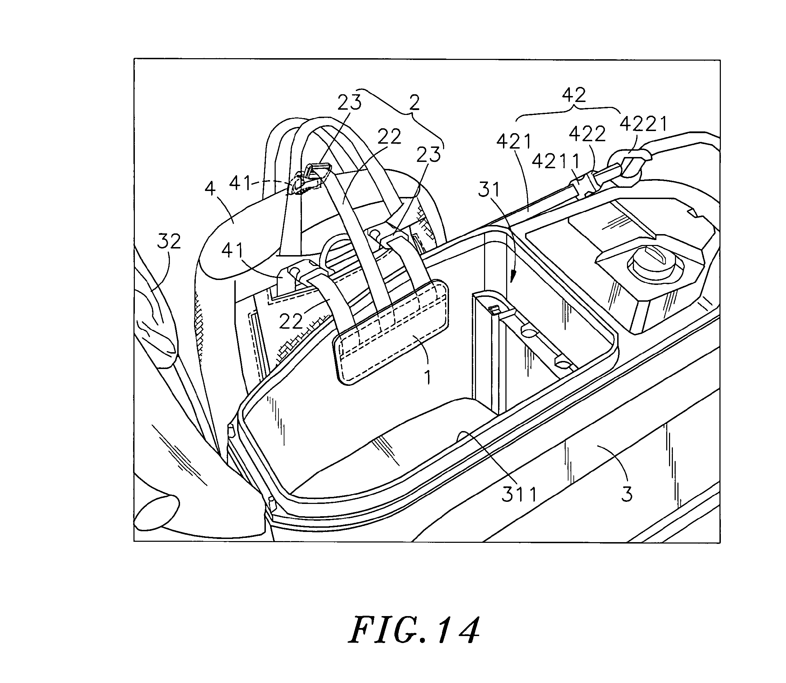

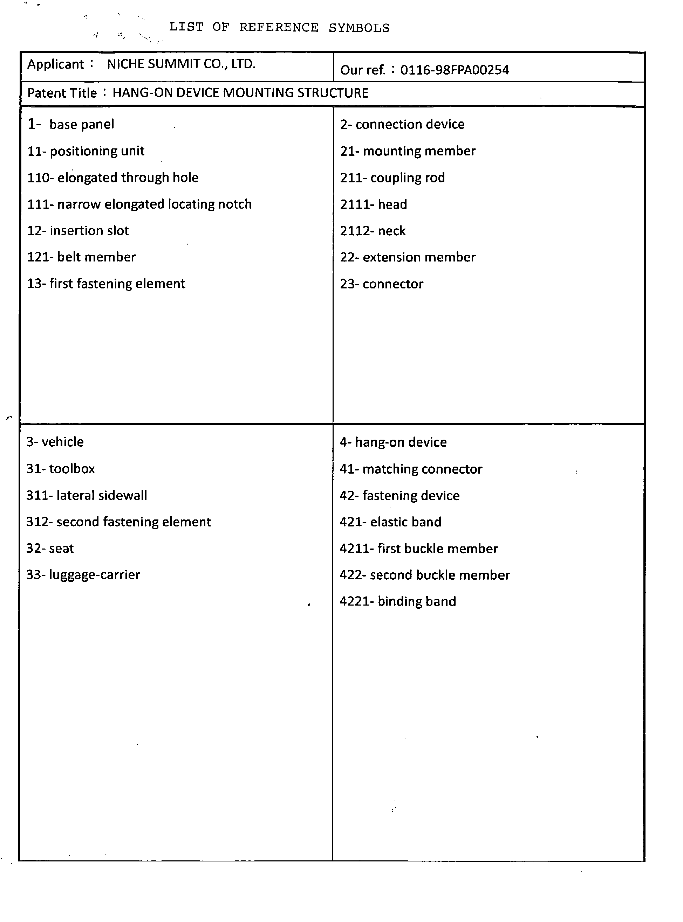

Referring to FIGS. 11, 12, 13 and 14, the hang-on device fastening comprises at least one base panel **1** and at least one connection device **2** for securing a hang-on device **4** to the at least one base panel **1.** Each base panel **1** has at least one positioning unit **11** and a plurality of insertion slots **12** spaced around the at least one positioning unit **11** for the insertion of belt members. Each connection device **2** comprises a mounting member **21** for fastening to one positioning unit **11** of one base panel **1,** a connector **23** connectable to one matching connector **41** of the hang-on device **4,** and an extension member **22** connected between the mounting member **21** and the connector **23.** According to this embodiment, the hang-on device mounting structure comprises three connection devices **2.** As stated above, the connector **23** of each connection device **2** can be a male fastening member that can be a male buckle member, hook member, stud or tape of hook materials, or a female fastening member that can be a female buckle member, eye member, socket or tape of loop materials. According to this embodiment, the connectors **23** of the two lateral connection devices **2** are male buckle members respectively fastened to the female buckle members of respective matching connectors **41** of the hang-on device **4,** and the connector **23** of the middle connection device **2** is a hook member fastened to the eye member of the respective matching connector **41** of the hang-on device **4.** Thus, the hang-on device **4** is firmly secured to the vehicle **3** against swinging.

A prototype of hang-on device mounting structure has been constructed with the features of FIGS. 1∼14. The hang-on device mounting structure comprises at least one base panel **1** mounted in a toolbox **31** or luggage-carrier **33** of a vehicle **3** and having at least one positioning unit **11,** and at least one connection device **2** each having an extension member **22,** a mounting member **21** located on one end of the extension member **22** and connected to one positioning unit **11** of one base panel **1** and a connector **23** located on the other end of the extension member **22** outside the toolbox **31** for connection to a matching connector **41** of a hang-on device **4** to secure the hang-on device **4** to the vehicle **3** against swinging.

In conclusion, the invention provides a hang-on device mounting structure, which has the following advantages and features:
1. By means of mounting at least one base panel **1** in a toolbox **31** or luggage-carrier **33** of a vehicle **3** and then using the at least one connection device **2** to connect a hang-on device **4** to the at least one base panel **1,** the hang-on device **4** is firmly secured to the vehicle **3** at one lateral side or held down on the luggage-carrier **33,** assuring motorcycle or bicycle rider's riding safety.
2. By means of the hang-on device mounting structure to secure the motorcycle or bicycle rider's personal hang-on device **4** to one lateral side of the toolbox **31** or the top side of the luggage-carrier **33** of the vehicle **3,** the motorcycle or bicycle rider does not need to put the personal hang-on device **4** on the front footrest of the vehicle to interfere with resting of the legs on the front footrest, and the toolbox **31** is left unoccupied for storing other things.
3. Each connection device **2** has a mounting member **21** located on one end of the extension member **22** thereof and connected to one base panel **1** and a connector **23** that can be a buckle member or hook member located on the other end of the extension member **22** for connection to one matching connector **41** of a hang-on device **4** to secure the hang-on device **4** in place, keeping the hang-on device **4** in shape.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A hang-on device mounting structure, comprising:
at least one base panel(1) mountable on a vehicle(3) to hold a hand-on device, each said base panel(1) having at least one positioning unit(11) for mounting;
at least one connection device(2) for securing a hang-on device(4) to said at least one base panel(1), each said connection device(2) comprising a mounting member(21) for fastening to one positioning unit(11) of one said base panel(1) and an extension member(22) extended from sad mounting member(21) to secure a hang-on device(4).

2. The hang-on device mounting structure as claimed in claim 1, wherein each said positioning unit(11) of each said base panel(1) comprises at least one through hole; the mounting member(21) of each said connection device(2) comprises at least one coupling rod(211) for coupling to the at least one through hole of one said positioning unit(11).

3. The hang-on device mounting structure as claimed in claim 2, wherein each said positioning unit(11) of each said base panel(1) further comprises a narrow elongated notch extended from one end of each of the at least one through hole thereof; each coupling rod(211) of the mounting member(21) of each said connection device(2) comprises a head(2111) insertable through one through hole of one said positioning unit(11) of one said base panel(1) and a neck(2112) connected between said head(2111) and the respective mounting member(21) for engaging into the narrow elongated notch of the associating positioning unit(11).

4. The hang-on device mounting structure as claimed in claim 1, wherein each said positioning unit (11) of each said base panel(1) comprises at least one coupling rod(211); the mounting member(21) of each said connection device(2) comprises at least one through hole for coupling to the at least one coupling rod(211) of one said positioning unit(11).

5. The hang-on device mounting structure as claimed in claim 4, wherein the mounting member(21) of each said connection device(2) further comprises a narrow elongated notch extended from one end of each of the at least one through hole thereof; each coupling rod(211) of each said positioning unit(11) of each said base panel(1) further comprises a head(2111) insertable through one through hole of the mounting member(21) of one said connection device(2) and a neck connected between said head(2111) and the respective positioning unit(11) for engaging into the narrow elongated notch of the associating mounting member(21).

6. The hang-on device mounting structure as claimed in claim 1, wherein the mounting member(21) of each said connection device(2) is fixedly fastened to one positioning unit(11) of one said base panel(1) by stitches.

7. The hang-on device mounting structure as claimed in claim 1, wherein the mounting member(21) of each said connection device(2) is fixedly fastened to one positioning unit(11) of one said base panel(1) by an adhesive.

8. The hang-on device mounting structure as claimed in claim 1, wherein each said base panel(1) has a plurality of insertion slots (12) for the insertion of insertion slots (121) selected from a group of fabric straps, ropes, elastic bands (421), rubber tapes and rubber rods.

9. The hang-on device mounting structure as claimed in claim 1, wherein each said connection device(2) further comprises a connector(23) located on an opposite end of the extension member(22) thereof remote from the mounting member(21) of the respective connection device(2) for connection to said hang-device.

10. The hang-on device mounting structure as claimed in claim 9, wherein the extension member(22) of each said connection device(2) is selectively prepared from a group of fabric straps, ropes, elastic bands (421), rubber tapes and rubber rods.

11. The hang-on device mounting structure as claimed in claim 9, wherein the connector(23) of each said connection device(2) is a male fastening member selected from a group of male buckle member, hook member, stud and tape of hook materials.

12. The hang-on device mounting structure as claimed in claim 9, wherein the connector(23) of each said connection device(2) is a female fastening member selected from a group of female buckle member, eye member, socket and tape of loop materials.

13. The hang-on device mounting structure as claimed in claim 1, wherein each said base panel(1) is selectively mountable in a toolbox(31)/luggage-carrier(33) of a vehicle(3); each said connection device(2) further comprises a connector(23) located on an opposite end of the extension member(22) thereof remote from the mounting member(21) of the respective connection device(2) for connection to the hang-on device(4) to be carried.
